# EUROPÄISCHE PATENTSCHRIFT

(11) **EP 0 630 291 B1**
(45) Veröffentlichungstag und Bekanntmachung des Hinweises auf die Patenterteilung: **02.11.1995**
(21) Anmeldenummer: 93905318.7
(22) Anmeldetag: 08.03.1993
(51) Int. Cl.: B01J 35/10, B01J 23/46, C02F 1/70

(54) **ABRIEBFESTER TRÄGERKATALYSATOR**
ABRASION-RESISTANT CARRIER CATALYST
CATALYSEUR A SUPPORT RESISTANT A L'ABRASION

(30) Priorität: 13.03.1992 DE 4207959; 13.03.1992 DE 4207960
(43) Veröffentlichungstag der Anmeldung: 28.12.1994
(73) Patentinhaber: Solvay Umweltchemie GmbH, D-30173 Hannover (DE)
(72) Erfinder: BONSE, Dirk, D-3160 Lehrte-Arpke (DE); BRETZ, Karl-Heinz, D-3070 Nienburg (DE); DERLETH, Helmut, D-3070 Nienburg (DE); SELL, Michael, D-3150 Peine (DE); BISCHOFF, Michael, D-3300 Braunschweig (DE)
(74) Vertreter: Lauer, Dieter, Dr.
(86) Internationale Anmeldenummer: EP9300523
(87) Internationale Veröffentlichungsnummer: WO9317790

(56) Entgegenhaltungen:
- EP-A- 0 015 801
- US-A- 4 990 266

## Beschreibung

Die Erfindung bezieht sich auf einen abriebfesten, zur Entfernung von Nitrit und/oder Nitrat aus entsprechend belastetem Wasser geeignetem Trägerkatalysator und seine Anwendung zur Entfernung des Sauerstoff-, Nitrit- oder Nitratgehaltes in Wasser.

Die in Grund- und Oberflächenwasser in der Bundesrepublik Deutschland aufgefundenen Nitrit- und/oder Nitratgehalte sind in den letzten Jahren erheblich angestiegen. Sie schwanken je nach Standort erheblich und können teilweise die tolerierbaren Höchstgrenzen überschreiten. Für Trinkwasser wird in den neuesten EG-Richtlinien ein zulässiger Grenzwert von 50 mg Nitrat pro Liter empfohlen und für Nitrit ein Grenzwert von 0,1 mg/l. Die steigenden Nitrit- und Nitratgehalte in vielen Grund- und Oberflächenwassern machen in zunehmendem Maße Verfahren zur Nitrit- und Nitratentfernung im Rahmen der Trinkwasseraufbereitung nötig.

Zur Nitrit- und Nitratentfernung aus Trinkwasser können biologische Verfahren und physikalisch/chemische Maßnahmen im Bereich der Wasserentsalzung angewendet werden. Bekannte Nachteile dieser Verfahren sind die mögliche Kontamination mit Bakterien oder deren Stoffwechselprodukten bzw. die bloße Verlagerung des Problems.

Die Entfernung von Sauerstoff aus Wasser (das gegebenenfalls auch frei von Nitrit bzw. Nitrat sein kann) ist in vielen Fällen wünschenswert. So ist bekannt, daß Sauerstoff in Wasser die Korrosion von metallischen Bauteilen wie Kühlanlagen fördert. In Bereichen der Lebensmittelherstellung, beispielsweise im Bereich der Herstellung von Getränken wie Fruchtsäften oder Alkoholika, wird vorzugsweise ein sauerstorfarmes oder sauerstoffreiches Wasser verwendet.

Die EP-A-0 359 074 (US-A 4 990 266) beschreibt ein katalytisch arbeitendes Verfahren zur Entfernung von Nitrit und/oder Nitrat aus nitrit- und/oder nitratbelastetem Wasser unter selektiver Stickstoffbildung. Man verwendet einen Trägerkatalysator, der gebildet wird aus einem mit einer aus Palladium und/oder Rhodium oder aus Palladium und einem Metall der Kupfergruppe bestehenden Metallkomponente imprägnierten porösen Träger. Dieser Träger weist eine bimodale Porenradienverteilung mit einem mindestens 30 %igen Anteil bezogen auf das Gesamtporenvolumen an Makroporen mit einem Mindestradius von 200 nm (2000 Å) auf und/oder eine inhomogene Verteilung der Metallkomponente mit einer Konzentrierung im Oberflächenbereich oder er liegt als Pulver vor.

Aufgabe der vorliegenden Erfindung ist es, ein besonders abriebfesten Trägerkatalysator zur Verfügung zu stellen, der die selektive Überführung von Nitrit und/oder Nitrat in Stickstoff gestattet. Diese Aufgabe wird durch den in den Ansprüchen angegebenen Trägerkatalysator gelöst.

Aufgabe der vorliegenden Erfindung ist es weiterhin, ein verbessertes, katalytisch arbeitendes Verfahren zur Entfernung von Sauerstoff, Nitrit und/oder Nitrat aus Wasser bereitzustellen. Insbesondere ist es Aufgabe der Erfindung, ein verbessertes katalytisches Verfahren zu entwickeln, welches bei den bei der Wasseraufbereitung üblichen Bedingungen durchführbar ist, und bei welchem der Sauerstoff-, Nitrit- und/oder Nitratgehalt unter Bildung harmloser Produkte, insbesondere Wasser bzw. Stickstoff entfernt wird, ohne daß dabei das Wasser mit unerwünschten Mengen an Ammonium belastet wird.

Der erfindungsgemäße, zur Entfernung des Nitrit- und/oder Nitratgehaltes von nitrit- und/oder nitratbelastetem Wasser unter selektiver Stickstoffbildung geeignete Trägerkatalysator besteht aus einem mit einer Metallkomponente imprägnierten porösem anorganischen Trägermaterial und ist dadurch gekennzeichnet, daß der Träger aus Aluminiumoxid der Modifikationen "theta" und "kappa" besteht, wobei die Modifikation "alpha" in einem Anteil von weniger als 10 Gew.-%, bezogen auf das Trägergewicht vorliegt und der Träger frei ist von Aluminiumoxid der Modifikationen "gamma" und "delta" und entweder ein Maximum (monomodale Porenverteilung) des Porendurchmessers im Bereich von 70 bis 150 nm (700 bis 1500 Å) aufweist oder zwei Maxima (bimodale Porenverteilung) des Porendurchmessers im Bereich von 10 bis 150 nm (100 bis 1500 Å) aufweist, wobei der mittlere Porendurchmesser zwischen 30 und 50 nm (300 und 500 Å) beträgt.

Die spezifische Oberfläche, berechnet nach der Quecksilber-Porosimetrie-Methode, beträgt bevorzugt zwischen 41 und 50 m²/g.

Der Katalysator kann in üblichen Katalysatorformen vorliegen, als Monolith oder als Schüttgutträger, beispielsweise in Form von Hohlkugeln, Zylindern, Halbkugeln, als Strangpressling usw. Bevorzugt liegt er in Kugelform vor. Der Durchmesser der Kugeln liegt zweckmäßig zwischen 0,1 mm und 20 mm, vorzugsweise zwischen 0,1 und 1,0 mm und insbesondere zwischen 0,3 und 0,8 mm.

Der erfindungsgemäße Trägerkatalysator enthält als Metall der Kupfergruppe vorzugsweise Kupfer oder Silber, insbesondere Kupfer.

Die Metallkomponente macht vorzugsweise 0,1 bis 10 Gew.-%, insbesondere 0,5 und 6 Gew.-%, ganz besonders bevorzugt 0,5 und 4 Gew.-%, des Gesamtgewichts des fertigen Katalysators aus.

Vorzugsweise besteht die Metallkomponente aus Palladium oder einem Gemisch von Palladium und Kupfer. Der Palladiumgehalt beträgt bevorzugt 0,1 bis 5 Gew.-%, insbesondere 0,3 bis 3 Gew.-%, bezogen auf das Gesamtgewicht des fertigen Trägerkatalysators. Besteht die Metallkomponente aus Palladium und Kupfer, liegt das Gewichtsverhältnis von Palladium zu Kupfer vorzugsweise zwischen 2:1 und 8:1, vorzugsweise 3:1 und 5:1, insbesondere 4:1.

Das Gewichtsverhältnis der Modifikation "theta" zu "kappa" liegt vorzugsweise zwischen 30:70 und 10:90, insbesondere zwischen 25:75 und 15:85.

Weist der erfindungsgemäße Trägerkatalysator einen Träger mit monomodaler Porendurchmesserverteilung auf, liegt das Maximum des Porendurchmessers bevorzugt zwischen 85 und 105 nm (850 und 1050 Å).

Ein weiterer Gegenstand der vorliegenden Erfindung ist ein Katalysatorsystem, das vorzugsweise aus einer Mehrzahl von kugelförmigen erfindungsgemäßen Trägerkatalysatoren gebildet wird. Dieses Katalysatorsystem umfaßt erfindungsgemäße Trägerkatalysatoren, die nur mit Palladium imprägniert sind, sowie erfindungsgemäße Trägerkatalysatoren, die mit Palladium und einem Metall der Kupfergruppe, insbesondere Kupfer imprägniert sind. Die verschiedenen Trägerkatalysatoren können als Gemisch oder getrennt voneinander im System vorliegen.

Im folgenden wird die Herstellung des erfindungsgemäßen Trägerkatalysators beschrieben. Die Herstellung des erfindungsgemäßen Trägerkatalysators ist dadurch gekennzeichnet, daß man amorphes Aluminiumoxid (Modifikation "chi") mit Aluminiumoxidhydrat mit Ausnahme von beta-Aluminiummonohydrat im Gewichtsverhältnis 33,69:20,50 bis 44,21:7,17, gewünschtenfalls unter Wasserzusatz, miteinander vermischt, in die gewünschte Form bringt, 4,5 bis 6,5 Stunden lang bei einer Temperatur von 1045 bis 1055 °C kalziniert, mit der Metallkomponente imprägniert und kalziniert.

Es gilt, daß das Maximum der Porendurchmesser und der durchschnittliche Porendurchmesser zu höheren Werten verschoben werden, je höher die Kalzinierungstemperatur ist und je länger die Kalzinierung andauert. Die BET-Oberfläche sinkt, je höher die Kalzinierungstemperatur und je länger die Kalzinierung andauert.

Das als Ausgangsmaterial verwendete amorphe Aluminiumoxid liegt zweckmäßig in feinverteilter Form vor, z.B. in Form von Partikeln mit einem Durchmesser unterhalb von 1 Mikrometer. Es kann, wie in der EP-A-0 176 476 beschrieben, durch Flash-Trocknung von feinkörnigem Aluminiumhydroxid hergestellt werden. Sein Wassergehalt liegt zwischen 3 und 8 Gew.-%. Als besonders gut verwendbar hat sich amorphes Aluminiumoxid mit der Bezeichnung HLS^{R} der Firma Martinswerk GmbH, Bergheim, herausgestellt. Dies ist ein rehydratisierbares amorphes Aluminiumoxid mit einem Aluminiumoxidgehalt von 96 %. Der Gehalt an Natriumoxid liegt zwischen 0,2 und 0,35 %, der Wassergehalt bei ca. 4 %. Es ist sehr feinteilig, 99 % der Partikel weisen einen Durchmesser von kleiner als 1 Mikrometer auf. Die spezifische Oberfläche beträgt etwa 200 m²/g.

Das andere Aluminiumoxid-Ausgangsmaterial, vorzugsweise alpha-Aluminiumoxid-Monohydrat (Böhmit, Pseudoböhmit) liegt zweckmäßig in Form von Partikeln mit einem Durchmesser unterhalb von 100 Mikrometern vor. Als besonders gut geeignet erwiesen sich die Handelsprodukte PURAL NF^{R} und PURAL SB^{R} der Firma Condea Chemie, Brunsbüttel sowie das Handelsprodukt CATAPAL B^{R} der Firma Vista Chemical Company. PURAL NF^{R} ist ein Böhmit (alpha-Aluminium-Monohydrat) mit 70 % Aluminiumoxid, maximal 0,005 % Natriumoxid. Die spezifische Oberfläche nach dreistündiger Aktivierung bei 550 °C beträgt mindestens 160 m²/g. Mindestens 99 % der Partikel weisen einen Durchmesser von kleiner als 100 Mikrometer auf. Das Handelsprodukt PURAL SB^{R} besteht typischerweise zu 75 % aus Aluminiumoxid, und der Natriumoxid-Gehalt beträgt typischerweise maximal 0,002 %. PURAL SB^{R} ist ebenfalls ein Böhmit, seine Oberfläche nach dreistündiger Aktivierung bei 550 °C beträgt typischerweise 250 m²/g. Mindestens 90 % der Partikel weisen eine Partikelgröße von kleiner 90 Mikrometer auf. Das Handelsprodukt CATAPAL B^{R} besteht aus kleinen Böhmit-Kristalliten, die oft auch als Pseudoböhmit bezeichnet werden. Es besteht typischerweise zu 70,7 % aus Aluminiumoxid, der Natriumoxid-Gehalt beträgt typischerweise 0,004 Gew.-%, die Oberfläche 273 m²/g. CATAPAL B^{R} ist besonders gut geeignet zur Herstellung von Katalysator-Trägern mit bimodaler Porenstruktur.

Gemäß einer bevorzugten Variante des Trägers liegen die Modifikationen "theta" und "kappa" im Gewichtsverhältnis 30:70 bis 10:90 vor. Zur Herstellung eines solchen Trägers vermischt man amorphes Aluminiumoxid und Aluminiumoxid-Hydrat im Gewichtsverhältnis von 37,90:15,17 bis 42,11:9,83.

Was die Form des Katalysator-Trägers angeht, so kann man das Ausgangsmaterial in jede Form bringen, in die man keramisches Trägermaterial üblicherweise bringt. So kann man es zu einem monolithischen Träger formen. Man kann es auch in Schüttgut-Formen bringen, beispielsweise in Zylinder-, Strangpressling-, Würfel-, Halbkugel-, Hohlkugelform und andere. Bevorzugt bringt man es in Kugelform. Dies geschieht zweckmäßig nach der Methode der "Aufbaugranulation". Diese Methode wird in der Veröffentlichung von W. Peach in "Aufbereitungs-Technik" 4 (1966), Seiten 177 bis 191 sowie in der EP-A-0 176 476 (US-A 4 637 908) beschrieben.

Man erzeugt zunächst eine Mischung aus amorphem Aluminiumoxid und Aluminiumoxid-Hydrat, vorzugsweise alpha-Aluminiumoxid-Monohydrat, und unterwirft die Mischung auf einem Drehteller einer Aufbaugranulation unter Zusatz von Wasser. Es ist vorteilhaft, Unterkorn und/oder zerkleinertes Überkorn aus einer früheren Aufbaugranulation als Keimbildner zuzusetzen. Das durch Aufbaugranulation erzeugte kugelförmige Aluminiumoxid wird dann zweckmäßig durch Stehenlassen gealtert und die gewünschte Fraktion abgesiebt. Das Unterkorn und, nach entsprechendem Zerkleinern, auch das Überkorn können wie gesagt als Keimbildner in die Granulation rückgeführt werden. Das durch Aufbaugranulation gewonnene Gut wird dann getrocknet und wie oben beschrieben kalziniert und in das erfindungsgemäße Katalysator-Trägermaterial überführt.

Die für die Einstellung der gewünschten Eigenschaften wichtigen Parameter Kalzinationszeit und Kalzinationstemperatur können in Abhängigkeit vom jeweils verwendeten Ausgangsmaterial geringfügig schwanken. Gewünschtenfalls kann man die idealen Verfahrensparameter durch einige Vorversuche ermitteln. Beispielsweise erhöht man die Temperatur und vergrößert den Anteil an "theta"- und "kappa"-Modifikation auf Kosten etwaiger Anteile an "delta"- oder "gamma"-Modifikationen. Ist der Anteil an "alpha"-Modifikation zu groß, so senkt man die Kalzinierungstemperatur. Um das bzw. die Porenmaxima bzw. den mittleren Porendurchmesser zu höheren Werten zu verschieben, kann man die Kalzinationstemperatur erhöhen bzw. die Kalzinationsdauer verlängern. Im entgegengesetzten Fall verringert man die Kalzinationstemperatur bzw. verkürzt die Kalzinationsdauer. Den jeweiligen Anteil der Modifikationen kann man röntgenspektroskopisch bestimmen, die spezifische Oberfläche, das Porenvolumen und die Porenverteilung bestimmt man durch Quecksilber-Porosimetrie. Die Maxima der Porendurchmesser und der mittlere Porendurchmesser lassen sich daraus ermitteln.

Gewünschtenfalls kann man das Aluminiumoxid vor dem Kalzinieren vortempern, z.B. bis zu mehreren Stunden lang. So kann man 2 bis 6 Stunden lang bei Temperaturen zwischen 550 und 650 °C vortempern.

Ein Vorteil des Aufbaugranulations-Verfahrens ist, daß man das Aluminiumoxid zu Partikeln mit sehr variablem Durchmesser rollen kann. So kann der Durchmesser z.B. von 0,1 bis 20 mm betragen. Bevorzugt rollt man zu kugelförmigen Partikeln mit einem Durchmesser von 0,1 bis 1,0 mm, insbesondere 0,3 bis 0,8 mm. Das Kornspektrum weist bei der Methode eine sehr geringe Streubreite auf, die größten und die kleinsten Partikel variieren im Durchmesser um nicht mehr als 0,2 mm. Natürlich kann man die Partikel im Laufe des Herstellverfahrens noch in spezielle Fraktionen aufteilen, z.B. durch Sieben.

Die überführung der kalzinierten Träger in die erfindungsgemäßen Trägerkatalysatoren kann in an sich bekannter Weise erfolgen. Beispielsweise kann man Salze oder komplexe Verbindungen des Palladiums, Rhodiums bzw. des Elementes der Kupfergruppe im Tränkverfahren, Sprühverfahren oder Fällungsverfahren auf das Trägermaterial aufbringen und nach Trocknung und anschließender Kalzinierung gewünschtenfalls reduzieren. Das Trägermaterial kann beispielsweise mit einer Lösung oder Suspension von Metallsalzen oder komplexen Metallverbindungen in Wasser oder einem organischen Lösungsmittel, beispielsweise einem niederen Alkohol wie Äthanol, oder Keton, oder deren Gemischen getränkt oder besprüht und getrocknet werden. nach dem Trocknen können sie gewünschtenfalls auch bei Temperaturen bis zu 600 °C, beispielsweise zwischen 300 und 600 °C kalziniert werden. Gewünschtenfalls kann sich noch eine Reduktion mit einem metallfreien Reduktionsmittel, vorzugsweise Wasserstoff oder gegebenenfalls auch einem anderen Reduktionsmittel wie NaBH₄, LiAlH₄, Hydrazin, Formaldehyd, Kohlenmonoxid oder Methan unter thermischer Behandlung bei Temperaturen im Bereich bis zu 550 °C, beispielsweise zwischen ca. 100 und 550 °C, anschließen.

Die erfindungsgemäßen Trägerkatalysatoren eignen sich beispielsweise zur Entfernung von Sauerstoff aus Wasser. Sauerstoffarmes oder sauerstofffreies Wasser wird beispielsweise zur Herstellung von alkoholischen oder nichtalkoholischen Getränken verwendet. Sauerstoffarmes Wasser weist weiterhin den Vorteil der geringeren Korosivität auf und wird deshalb oft als Kühlwasser verwendet. Zur Reduktion des Sauerstoffs wird das Sauerstoff enthaltende Wasser mit elementarem Wasserstoffgas, vorzugsweise bei Normaldruck oder Überdruck, versetzt und dann durch einen erfindungsgemäßen Trägerkatalysator geleitet. Kugelförmige Trägerkatalysatoren sind besonders gut geeignet, da mit ihnen das Verfahren in der Wirbelschicht betrieben werden kann.

Der erfindungsgemäße Trägerkatalysator eignet sich auch zur Entfernung oder Verminderung des Nitrit- und/oder Nitratgehaltes von nitrit- und/oder nitratbelastetem Wasser unter selektiver Stickstoffbildung. Auch hier verwendet man bevorzugt einen kugelförmigen Trägerkatalysator, da dann das Verfahren besonders effektiv in der Wirbelschicht betrieben werden kann.

Träger und Trägerkatalysatoren sind so stabil, daß sie auch unter extremen Bedingungen, z. B. bei Temperaturen von bis zu 120 °C und mehr und Drücken von bis zu 40·10⁵Pa (40 bar) und mehr eingesetzt werden können.

Wie gesagt, besteht eine weitere Aufgabe der Erfindung in der Angabe eines verbesserten Reaktionsverfahrens. Es wurde nun, ausgehend von dem in der EP-A-0 359 074, ein verbessertes, kontinuierlich durchführbares katalytisches Reduktionsverfahren gefunden, mit welchem Sauerstoff, Nitrit und/oder Nitrat aus Wasser entfernt werden können unter Bildung von nichttoxischen Reaktionsprodukten, überwiegend Wasser bzw. Stickstoff und unter weitgehender Vermeidung der Bildung von Ammoniumionen, und welches insbesondere bei der Aufbereitung von nitrit- und/oder nitratbelasteten Grundwässern, Flußwässern, Quellwässern oder industriellen Abwässern, beispielsweise im Rahmen der Herstellung von Brauchwässern für nie Lebensmittel- oder Getränke-Industrie oder von Trinkwasser und zur Entfernung von Nitrit und/oder Nitrat aus Getränken wie Mineralwässern oder Fruchtsäften oder aus Wässern, die zur Herstellung von Getränken wie Mineralwässern, Fruchtsäften oder Alkoholika bestimmt sind, sowie zur Entfernung von Sauerstoff aus den genannten Wässern verwendbar ist. Dabei wurden die vorstehend beschriebenen Katalysatoren bzw. das Katalysatorsystem eingesetzt.

Gegenstand der Erfindung ist ein kontinuierlich durchführbares Verfahren zur Entfernung oder Verminderung des Sauerstoffgehaltes, des Nitrit- und/oder Nitrat-Gehaltes von sauerstoffhaltigem und/oder nitrit- und/oder nitratbelastetem Wasser unter selektiver Stickstoff-Bildung, wobei man in das sauerstoffhaltige, nitrit- und/oder nitratbelastete Wasser Wasserstoffgas einführt und das mit Wasserstoff beladene Wasser mit einem Katalysator kontaktiert, welcher gebildet wird aus einem mit einer Palladium und/oder Rhodium oder aus Palladium und einem Metall der Kupfergruppe bestehenden Metallkomponente imprägnierten porösen Träger, wobei der Träger aus Aluminiumoxid der Modifikationen "theta" und "kappa" besteht und die Modifikation "alpha" nicht oder in einem Anteil von weniger als 10 Gew.-%, bezogen auf das Trägergewicht vorliegt und der Träger frei ist von Aluminiumoxid der Modifikationen "gamma" und "delta", und entweder eine monomodale Verteilung der Porendurchmesser mit einem Maximum im Bereich zwischen 70 und 150 nm (700 Å und 1500 Å) aufweist, oder eine bimodale Verteilung der Porendurchmesser mit zwei Maxima im Bereich von 10 bis 150 nm (100 bis 1500 Å) aufweist, wobei der mittlere Porendurchmesser zwischen 30 und 50 nm (300 und 500 Å) beträgt, und man zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einem Metall der Kupfergruppe aus Rhodium und gegebenenfalls Palladium besteht, oder einem Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über pH 8 ansteigen läßt und das Verfahren gegebenenfalls so oft hintereinander durchführt, bis der Sauerstoffgehalt, der Nitritgehalt und/oder der Nitratgehalt des Wassers entfernt oder auf einen tolerierbaren Wert vermindert ist.

Bevorzugte Ausführungsformen des Verfahrens führt man mit weiter oben angegebenen bevorzugten erfindungsgemäßen Katalysatoren durch. So soll die Modifikation "alpha" zu maximal 10 Gew.-% im Träger vorliegen.

Das erfindungsgemäße Verfahren ist deshalb noch effektiver als das aus der EP-A-0 359 074 bekannte Verfahren, da der spezielle Aluminiumoxidträgerkatalysator bei hoher Selektivität sehr abriebfest ist und eine höhere Standzeit aufweist. Weitere Vorteile sind mit der Durchführung in der Wirbelschicht verbunden, was später noch erläutert wird.

Im Rahmen der vorliegenden Erfindung können sauerstoffhaltige bzw. nitrit- oder nitratbelastete Wässer und wäßrige Lösungen beliebiger Herkunft behandelt werden, sofern sie frei von Stoffen sind, welche bekanntermaßen als Gifte für Palladium-, Rhodium- oder Metalle der Kupfergruppe enthaltende Katalysatoren wirken oder das Trägermaterial angreifen können. In der vorligenden Anmeldung bezeichnet der Ausdruck "Wasser" derartige Wässer und wäßrige Lösungen. Enthält das zu reinigende Wasser unter den Reaktionsbedingungen des erfindungsgemäßen Verfahrens reduzierbare andere Stoffe, werden diese ebenfalls reduziert. Sofern es wünschenswert erscheint, entfernt man solche reduzierbare andere Stoffe vorher aus dem zu reinigenden Wasser.

Der Nitrit- und/oder Nitrat-Gehalt sowie der Sauerstoffgehalt, welcher mit dem erfindungsgemäßen Verfahren entfernt oder auf eine tolerierbare vermindert werden kann, kann in einem weiten Bereich variieren. So lassen sich mit dem erfindungsgemäßen Verfahren Wasser mit einer Nitrat- und/oder Nitratbelastung zwischen 0,1 mg/l und einigen Gramm pro Liter behandeln. Insbesondere ist das vorligende Verfahren geeignet zur Entfernung des Nitrit- und/oder Nitrat-Gehaltes aus Wasser mit einer geringen Nitrit- und/oder Nitratbelastung, beispielsweise im Bereich von 0,1 bis 20 mg/l Nitrit und/oder etwa 5 bis 600 mg/l Nitrat.

Für den Fachmann ist klar, daß das erfindungsgemäße Verfahren zur Entfernung von Sauerstoff aus Wasser angewandt werden kann, welches weder Nitrit noch Nitrat enthält. Das Verfahren kann natürlich auch zur Entfernung von Nitrit und/oder Nitrat aus Wasser angewendet werden, welches keinen Sauerstoff enthält. Schließlich kann man das Verfahren gemäß einer weiteren Variante auch zur Entfernung von Nitrit und/oder Nitrat aus gleichzeitig Sauerstoff enthaltendem Wasser anwenden. In diesem Fall wird neben Nitrit bzw. Nitrat auch der Sauerstoff entfernt.

Insbesondere wird das erfindungsgemäße Verfahren zur Behandlung von Wasser eingesetzt, welches in seinem Reinheitsgrad einem Wasser entspricht, welches eine natürliche Filtration durchlaufen hat. Derartiges Wasser kann wasserlösliche Substanzen, z.B. anorganische Salze, in Größenordnungen, wie sie im Grundwasser anzutreffen sind, also z.B. bis zu einigen Gramm pro Liter enthalten. Beispiele von mit dem erfindungsgemäßen Verfahren zu behandelnden Wasser sind z.B. Grundwasser, Brunnenwasser, Quellwasser oder Uferfiltrate oder bereits entsprechend vorgereinigte sonstige Abwässer z.B. industrielle Abwässer, beispielsweise aus Rauchgaswäschen, in welchen der Gehalt an Sauerstoff, Nitrit und/oder Nitrat vermindert werden kann. Weitere Beispiele für Wasser, die mit dem erfindungsgemäßen Verfahren zu behandeln sind, sind Getränke wie Mineralwässer, Limonaden und Fruchtsäfte sowie Wasser, die zur Herstellung von Getränken wie Mineralwässer, Limonaden, Fruchtsäfte oder Alkoholika, z.B. zur Bierherstellung, verwendet werden sollen.

Das Verfahren eignet sich beispielsweise zur Anwendung im Rahmen der Trinkwasseraufarbeitung sowie der Aufarbeitung von Wasser bzw. Brauchwasser für die Lebensmittel- oder Getränkeindustrie sowie für sonstige Zwecke, wo ein sauerstoff-, nitrit- und/oder nitratarmes oder -freies Wasser benötigt wird.

Enthält das Wasser nur Nitrit und ggfs. Sauerstoff, so kann man einen erfindungsgemäßen Trägerkatalysator verwenden, dessen Metallkomponente aus Palladium und/oder Rhodium besteht. Enthält das zu behandelnde Wasser auch Nitrat, so verwendet man einen erfindungsgemäßen Trägerkatalysator, dessen Metallkomponente aus Palladium und einem Metall der Kupfergruppe oder aus Rhodium und gegebenenfalls Palladium besteht. Sofern das zu behandelnde Wasser auch Nitrat enthält, kann man auch das erfindungsgemäße Katalysatorsystem einsetzen, vorteilhaft das Katalysatorsystem aus nur Palladium als Metallkomponente enthaltenden Katalysatorteilchen und Palladium und ein Metall der Kupfergruppe, insbesondere Kupfer als Metallkomponente enthaltenden Trägerkatalysatorteilchen. Das Gewichtsverhältnis von Palladium-haltigen zu Palladium/Kupfer-haltigen Katalysatorteilchen kann je nach dem Nitrat- und Nitrit-Gehalt des Wassers und der Menge und Zusammensetzung der Metallkomponenten der Katalysatoren variieren und kann zwischen 1:5 und 5:1, vorzugsweise zwischen 1:2 und 2:1 liegen. Die unterschiedlichen Partikel liegen zweckmäßig getrennt voneinander vor. Man führt das zu behandelnde Wasser dann erst durch die Palladium/Kupfergruppenmetall-haltigen Partikel und dann durch die nur Palladium enthaltenden Partikel, vorzugsweise jeweils in der Wirbelschicht.

Die Diffusion in dem wäßrigen Medium soll ausreichend schnell vonstatten gehen. Dies ist eine wesentliche Voraussetzung zur Vermeidung von Ammoniumbildung. Diese Voraussetzung erfüllen die im erfindungsgemäßen Verfahren einzusetzenden Trägerkatalysatoren die aus dem angegebenen Aluminiumoxidmodifikationen "theta" und "kappa" bestehen und die angegebene Verteilung der Porendurchmesser aufweisen. Besonders vorteilhaft sind Katalysatoren mit einem Träger, welcher eine monomodale Verteilung der Porendurchmesser mit einem Maximum im Bereich zwischen 80 und 125 nm (800 Å und 1250 Å) aufweist, insbesondere zwischen 80 und 105 nm (800 Å und 1050 Å).

Die Oberfläche der Träger mit der vorstehend beschriebenen Struktur liegt bevorzugt im Bereich von etwa 41 bis 50 m²/g. Das Porenvolumen liegt vorteilhaft zwischen 0,35 ml/g und 0,60 ml/g. Das Gewichtsverhältnis der Modifikationen "theta" und "kappa" liegt vorzugsweise zwischen 30:70 und 10:90.

Man verwendet im erfindungsgemäßen Verfahren vorzugsweise kugelförmige Trägerkatalysatoren, da sie sich für ein Wirbelschichtverfahren besonders gut eignen. Andere Formen können aber ebenfalls verwendet werden, z.B. Trägerkatalysatoren in Form von Zylindern, Hohlzylindern, Hohlkugeln, Presslingen, Strangpresslingen etc. Natürlich kann man auch Träger in Monolithen-Form einsetzen. Für die besonders bevorzugte Ausführungsform des erfindungsgemäßen Verfahrens als Wirbelschicht-, Suspensions- oder Festbettreaktion werden kugelförmige Trägerkatalysatoren mit einer Teilchengröße von mindestens 0,1 mm, beispielsweise 0,1 mm bis 20 mm verwendet. Als besonders gut geeignet für die Durchführung als Wirbelschichtverfahren haben sich Katalysatorteilchen mit einem Durchmesser von 0,1 bis 1 mm, vorzugsweise 0,3 bis 0,8 mm erwiesen.

Bei der erfindungsgemäßen Behandlung von Nitrit- und/oder Nitrat-haltigem Wasser wird eine der reduzierten Nitrit- bzw. Nitratmenge äquivalente Menge an Hydroxylionen frei. Dies führt zu einem von der Menge des zu reduzierenden Nitrits und Nitrats bzw. des zur Reduktion zur Verfügung stehenden Wasserstoffs abhängigen Anstieg des pH-Wertes des behandelten Wassers. Zweckmäßig wird der pH-Wert des Wassers so reguliert, daß der reaktionsbedingte Anstieg nicht zu Werten über pH 8 führt. Die Einstellung des pH-Wertes kann beispielsweise durch Zugabe einer wäßrigen Lösung einer Säure, vorzugsweise einer verdünnten anorganischen Säure wie Salzsäure oder CO₂ erfolgen.

Das Einleiten des Wasserstoffgases in das Wasser und eine gegebenenfalls nötige pH-Regulierung können gewünschtenfalls erfolgen, während das Wasser mit dem Katalysator in Kontakt ist. Zweckmäßig wird jedoch das Wasserstoffgas in einem separaten Begasungsbehälter in das Wasser eingebracht, bevor dieses mit dem Katalysator kontaktiert wird. Gewünschtenfalls kann man dabei den pH-Wert des zu behandelnden Wassers so einregulieren, daß der nachfolgende pH-Anstieg im gewünschten Bereich bleibt.

Der pH-Wert des zu behandelnden Wassers sollte in einem Bereich von etwa 2 bis 8, insbesondere 4 bis 8 liegen.

Üblicherweise enthält Wasser, dessen Nitrit- und/oder Nitrat-Gehalt mit dem erfindungsgemäßen Verfahren reduziert werden soll, auch Sauerstoff gelöst. Zur vollständigen Entfernung des Nitrit- und/oder Nitrat-Gehaltes des Wassers wird daher insgesamt eine solche Menge Wasserstoffgas benötigt, welche mindestens der zu Reduktion des Sauerstoffgehaltes und des Nitrit- und/oder Nitrat-Gehaltes des Wassers stöchiometrisch notwendigen Menge entspricht. So sind zur Reduktion von 100 mg Nitrat theoretisch etwa 9 mg Wasserstoff erforderlich, zur Entfernung von 8 mg Sauerstoff etwa 1 mg Wasserstoff. Sofern das zu behandelnde Wasser nur geringere Mengen an Nitrit und/oder Nitrat enthält, erweist es sich als zweckmäßig, eine solche Menge Wasserstoff einzuleiten, welche mindestens der stöchiometrisch berechneten Menge und höchstens einem 20 %igen Überschuß dieser berechneten Menge entspricht.

Die Begasung des Wassers mit Wasserstoff erfolgt vorzugsweise nach der Art der Permeationsbegasung. Hierbei erfolgt der Gaseintrag in das Wasser über eine feste Membran, beispielsweise eine Silikonkautschukmembran. Besonders gut geeignet sind Membranen mit Integral-Asymmetrischem Aufbau und insbesondere Kompositmembranen. Diese Membranen umfassen eine poröse, wasserbeständige Trägerstruktur und mindestens eine Schicht aus wasserbeständigem, porenfreiem Polymer, an der die zu begasende Flüssigkeit vorbeigeführt wird. Diese porenfreie Schicht, z.B. aus Silikonpolymer, ist sehr dünn, sie weist beispielsweise eine Dicke von 0,5 bis 10 Mikrometer auf. Solche Membranen werden in der EP-A 291 679 (US-A 4 933 085) beschrieben. Andere Methoden, z.B. über Gassättiger, sind ebenfalls zum H₂-Eintrag geeignet.

Das erfindungsgemäße Verfahren kann bei Normaldruck oder geringem Überdruck, z.B. bis zu 10 Atmosphären oder mehr arbeiten. Die Löslichkeit des Wasserstoffgases in dem Wasser liegt bei Normaldruck und Temperaturen zwischen 10 und 25 °C unter 2 mg/l und wird bei Verdopplung des Druckes auch jeweils verdoppelt. Wo zur Reduktion höherer Nitrit- und/oder Nitratmengen entsprechend größere Mengen Wasserstoff benötigt werden, empfiehlt es sich daher, die Begasung unter Druck vorzunehmen. Bei der Behandlung von Wasser, das nur Sauerstoff enthält, ist das Arbeiten bei Umgebungsdruck sehr gut möglich.

Die Kontaktzeit zwischen Katalysator und dem zu behandelnden Wasser sollte zweckmäßigerweise nicht wesentlich über die benötigte Zeitdauer hinausgehen, die für die Überführung von Nitrit und/oder Nitrat zu Stickstoff notwendig ist. Längere Kontaktzeiten können möglicherweise die Reduktion des gebildeten Stickstoffes über die Nullstufe hinaus zu Ammonium begünstigen. Gegebenenfalls kann man einige Handversuche durchführen.

Bevorzugt betreibt man das erfindungsgemäße Verfahren als Wirbelbett, Suspensions- oder Fließbett. Diese Ausführungsform ist deshalb bevorzugt, da überraschenderweise eine Verkeimung der Katalysatorpartikel mit möglicher Verringerung der katalytischen Aktivität nicht erfolgt. Es ist deshalb nicht notwendig, wenn es natürlich auch möglich ist, eine Entkeimung beispielsweise durch UV-Licht oder andere Maßnahmen vorzunehmen.

Bei hohem Gehalt an Sauerstoff, Nitrit bzw. Nitrat kann man das erfindungsgemäße Verfahren notfalls mehrfach hintereinander durchführen, bis eine ausreichende Verminderung z.B. auch für Trinkwasser tolerierbare Werte oder eine vollständige Entfernung erreicht ist. Dabei kann man einen Teil des bereits behandelten Wassers in den Reaktor rückführen oder man sieht mehrere Reaktionseinheiten mit Begasungsbehälter und Reaktor vor. Über die eingesetzte Wasserstoffmenge bzw. mehrfache Behandlung des Wassers kann man jede beliebige Restkonzentration des ursprünglichen Gehaltes an Sauerstoff bzw. Nitrit oder Nitrat im behandelten Wasser einstellen.

Die Temperatur bei der Behandlung kann zwischen 5 °C und 95 °C, vorzugsweise 10 °C und 25 °C betragen.

Die Nitrit- und/oder Nitratabbauleistung kann je nach der Nitrit- und/oder Nitratanfangskonzentration, dem pH-Wert der Wasserstoffgaskonzentration bzw. -begasungsrate und der Temperatur variieren. Mit einem Palladium-Katalysator mit 2 Gew.-% Palladium und einem Maximum des Porendurchmessers bei 85 nm (850 Å) können beispielsweise Nitritabbauleistungen von über 20 mg Nitrit pro Stunde und Gramm Katalysator erzielt werden. Mit einem mit Palladium und Kupfer dotierten Katalysator mit 2 Gew.-% Palladium und 0,5 Gew.-% Kupfer auf Aluminiumoxid mit einem Maximum des Porendurchmessers bei 85 nm (850 Å) können beispielsweise Nitratabbauleistungen von 15 mg und mehr Nitrat pro Stunde und Gramm Katalysator erzielt werden.

Gewünschtenfalls kann man das Wasser vor der Behandlung zur Keimtötung durch eine Entkeimungsvorrichtung, beispielsweise eine UV-Durchflußlampe, leiten. Bei der vorteilhaften Arbeitsweise in der Wirbelschicht ist das aber nicht notwendig.

Ein kontinuierlich durchführbares Festbettverfahren und eine dafür verwendbare Anlage werden in der EP-A-0 359 074 beschrieben. Das Wasser wird zunächst in einen Dosierbehälter geleitet, in welchem der pH-Wert gemessen werden kann, dann durch eine Entkeimungsvorrichtung, schließlich über eine Pumpe durch eine oder mehrere Reaktionseinheiten aus Wasserstoff-Begasungsbehälter und Festbettreaktor. Die Anlage kann noch weitere Meßeinrichtungen umfassen, beispielsweise Durchflußmeßgeräte, Druckmeßgeräte, pH-Meßgeräte, Temperaturmeßgeräte. Das behandelte Wasser kann dann noch pH-Werteinstellung unterworfen werden.

Für die Durchführung des erfindungsgemäßen Verfahrens in der Wirbelschicht oder Suspensionsschicht ist die im folgenden beschriebene Anlage besonders gut geeignet. Sie umfaßt eine Druckerhöhungseinrichtung mit Flüssigkeitseinlaß und Flüssigkeitsauslaß, in der das unbehandelte Wasser mit Druck beaufschlagt werden kann. Die Druckerhöhungseinrichtung ist mit einer Wasserstoff-Eintragseinrichtung verbunden, die einen Wasserstoff-Einlaß aufweist. Mit der Wasserstoff-Eintragseinrichtung ist ein Wirbelschicht-, Suspensionsbett-oder Fließbettreaktor verbunden, der den obenbeschriebenen speziellen Aluminiumoxid-Trägerkatalysator aufweist. Dieser Reaktor weist ebenfalls einen Flüssigkeitseinlaß und Flüssigkeitsauslaß für das Wasser auf. Die vorstehend beschriebenen Anlagenteile sind durch Rohrleitungen zum Transport des Wassers verbunden. Vorzugsweise weist die Anlage 2 Filtereinrichtungen auf, die vor der Druckerhöhungseinrichtung bzw. nach dem Reaktor angeordnet sind. Die Anlage kann noch einen Dosierbehälter pH-Meß- und Regeleinrichtung aufweisen, der vor und/oder hinter Druckerhöhungseinrichtung angeordnet ist. Gewünschtenfalls können in den Rohrleitungen bzw. den Anlagenteilen noch Meßstellten zur Bestimmung analytischer Daten des Wasser angebracht sein, beispielsweise Druckmeßeinrichtungen, Duchflußmeßeinrichtungen und/oder Temperaturmeßeinrichtungen.

Eine Entkeimungsvorrichtung kann vorgesehen sein. Bevorzugt weist die Anlage keine Entkeimungsvorrichtung auf.

Die Begasungseinheit weist vorzugsweise eine Permeationsmembran zum Wasserstoffeintrag auf, z.B. ein Silikonschlauch. Sehr gut geeignet sind auch Permeationsmembranen, die eine aus porösem, wasserbeständigem Polymer gebildete Trägerstruktur umfassen und mindestens eine Schicht aus wasserbeständigem, porenfreien Polymer, wobei das zu behandelnde Wasser auf der Seite der Schicht aus wasserbeständigem, porenfreien Polymer mit der Membran in Kontakt steht. Sehr gut geeignet sind beispielsweise integralasymmetrische Membranen, z.B. aus Polyethamid. Ganz besonders gut geeignet sind Membranen, die zusätzlich mit wasserbeständigem, hydrophobem, porenfreiem Polymer, vorzugsweise Silikonpolymer, beschichtet sind. Solche Membranen sind als Komposit-Membranen bekannt. Die Begasungseinheit kann beispielsweise als Hohlfadenmodul ausgebildet sein. Ein solches Hohlfadenmodul weist eine Vielzahl, beispielsweise dutzende oder hunderte Hohlfäden auf. Beispielsweise können 100 bis 500 Hohlfäden in Form von Komposit-Membranen in einem Hohlfadenmodul zusammengefaßt sein. Die Hohlfäden sind über einen Verteiler mit einer Zuleitung für das zu behandelnde Wasser und über einen Sammler mit einer Ableitung für das begaste Wasser verbunden. Das Wasser wird durch die Hohlfäden hindurchgeführt. Das druckdicht verschließbare Modul weist noch eine Zuleitung für das Wasserstoffgas auf, das in den die Hohlfäden umgebenden Raum gepreßt wird und dann durch die Wand der Hohlfäden in das zu begasende Wasser diffundiert und dort blasenfrei eingetragen wird.

Das erfindungsgemäße Verfahren weist einige überraschende Vorteile auf. Aufgrund der hohen Selektivität der einzusetzenden Trägerkatalysatoren entstehen keine die Umwelt belastenden Nebenprodukte, aufgrund der hohen mechanischen Stabilität und Abriebfestigkeit dieser Katalysatoren kann das erfindungsgemäße Verfahren über lange Zeit ohne Einbuße an Katalysatoraktivität und ohne die Notwendigkeit eines Austausches des Katalysators beschrieben werden. Besonders vorteilhaft sowohl in wirtschaftlicher als auch hygienischer Hinsicht ist die Durchführung des erfindungsgemäßen Verfahrens bei Anwendung eines kugelförmigen Trägerkatalysators in der Wirbelschicht. Es ist völlig überraschend, daß eine Verkeimung des Katalysators, die seine katalytische Aktivität beeinträchtigen könnte und auch in hygienischer Hinsicht nicht wünschenswert ist, auch ohne zusätzliche Entkeimung wirksam unterdrückt wird.

Die Erfindung wird anhand der folgenden Beispiele erläutert, ohne sie in ihrem Umfang einzuschränken.

### Beispiele

### Allgemeines:

Die Katalysator-Träger, deren Herstellung in den folgenden Beispielen beschrieben wird, wurden einem Test unterworfen, welchem die relative Abriebfestigkeit verschiedener Träger miteinander verglichen werden konnte. Diese Bestimmung der relativen Abriebfestigkeit wurde folgendermaßen durchgeführt: Jeweils 1.0 g des zu untersuchenden Materials wurden in ein 10 ml-Schnappdeckelglas (45 x 22 mm) eingewogen und zweimal mit 5 ml vollentsalztem Wasser (VE-Wasser) gespült, um etwaig anhaftenden Staub zu entfernen. Das oberflächlich anhaftende Wasser wurde dabei mit einer Kapillare abgesaugt, so daß lediglich das in den Poren befindliche Wasser im Material verblieb. Es wurden dann erneut 5 ml VE-Wasser zugegeben und das verschlossene Glas 1 Minute auf einem Reagenzglasschüttler (Firma Heidolf, Reax 1R) bei 2400 Umdrehungen pro Minute geschüttelt. 2 ml der überstehenden Lösung wurden dann sofort in eine 10 mm-Küvette überführt und der Extinktionswert E mehrfach nach wiederholtem Aufschütteln bei λ = 500 µm gemessen (Spektralphotometer CADAS 100, Firma Dr. Lange). Bei E-Werten, die größer als 1 sind, muß die Probe entsprechend verdünnt werden, wobei die Linearität der Meßwerte gegeben ist.

Mechanisch stabile und damit abriebfeste Träger bzw. Katalysatoren zeigen unter diesen Versuchsbedingungen E-Werte im Bereich von 0.1 bis 0.7.

### Beispiele 1 bis 7: Herstellung des Trägermaterials

### Beispiel 1:

Herstellung von Aluminiumoxid-Trägern mit monomodaler Porenverteilung, Maximum des Porendurchmessers bei 85 nm (850 Å).
Angewendet wurde die Methode der Aufbaugranulation. 140 kg Keimbildner (Unterkorn aus einer früheren Aufbaugranulation mit 70 Gew.-% Aluminiumoxid und 30 Gew.-% Wasser, Partikelgröße kleiner 0,5 mm) wurden mit 3 l Wasser besprüht.
Anschließend wurden 105 kg einer Aluminiumoxidmischung hergestellt, indem amorphe, hochdisperse Tonerde (Handelsprodukt HLS^{R} der Firma Martinswerk, Bergheim) und Aluminiumoxid vom Böhmit-Typ (Handelprodukt Condea Pural SB^{R} der Firma Condea, Brunsbüttel) im Gewichtsverhältnis von 40:12,5 miteinander vermischt wurden. Dieses Aluminiumoxidgemisch wurde zusammen mit den 140 kg Keimbildner in einen Drehteller gegeben. Der rotierenden Masse wurden im Verlauf von 4 Stunden etwa 32,6 kg Wasser zugesprüht.
Dann wurden noch einmal 132 kg der vorstehend beschriebenen Aluminiumoxidmischung mit dem angegebenen Gewichtsverhältnis von amorphen Aluminiumoxid und Aluminiumoxid vom Böhmit-Typ der im Drehteller befindlichen Masse zugefügt. Im Verlauf von 2,5 Stunden wurden dann weitere 42 kg Wasser der rotierenden Masse zugesprüht. Dann wurde die Masse noch 20 Minuten nachgerollt und 16 Stunden lang im ruhenden Drehteller gealtert.
Unter Zudosieren von 3 kg Wasser wurde die gealterte Masse noch einmal 15 Minuten lang im Drehteller gerollt und anschließend abgesiebt. Unterkorn (Partikeldurchmesser kleiner 0,5 mm) und Überkorn (Partikeldurchmesser größer 0,68 mm) nach Zerkleinern wurden als Keimbildner in eine spätere Aufbaugranulation rückgeführt.
Die Fraktion mit einer Partikelgröße von 0,5 bis 0,68 mm wurde dann 16 Stunden lang bei 150 °C getrocknet.

### Ausbeute:

188 kg Trockengut der Zusammensetzung 85 Gew.-% Aluminiumoxid, Restwasser.
Dem vorgetrockneten Gut wurden dann 10 kg Material entnommen, welches zunächst 4 Stunden lang bei 600 °C vorgetrocknet und dann 5 Stunden lang bei 1050 °C kalziniert wurde.

### Ausbeute:

8,5 kg kugelförmiges Aluminiumoxid, bestehend aus den Modifikationen "theta" und "kappa" mit Spuren der Modifikation "alpha". Das Material war frei von den Modifikationen "gamma" und "delta".

### Maximum des Porendurchmessers:

85 nm (850 Å). Die Durchmesser der Poren verteilen sich auf einen Bereich zwischen etwa 6 nm (60 Å) und 180 nm (1800 Å).
Relative Abriebzahl: 0,63
Spezifische Oberfläche, gemessen nach der Quecksilber-Porosimetrie-Methode: 45 m²/g,
Porenvolumen: 0,40 ml/g
Mittlerer Porendurchmesser: 35,6 nm (356 Å).

### Beispiel 2:

Herstellung eines monomodalen Trägers mit einem Maximum des Porendurchmessers bei 95 nm (950 Å).
10 kg des gemäß Beispiel 1 hergestellten Ausgangsmaterials wurden zunächst 4 Stunden lang bei 600 °C vorgetrocknet und dann 6 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maximum des Porendurchmessers:

95 nm (950 Å). Die Durchmesser der Poren verteilen sich auf einen Bereich zwischen 8 nm und 180 nm (80 und 1800 Å).
Relative Abriebzahl: 0,64
Spezifische Oberfläche: 35 m²/g,
Porenvolumen: 0,39 ml/g.
Mittlerer Porendurchmesser: 44,6 nm (446 Å).

### Beispiel 3:

Herstellung eines monomodalen Trägers mit einem Maximum des Porendurchmessers bei 85 nm (850 Å).
Beispiel 1 wurde wiederholt. Anstelle des Aluminiumoxids der Marke Pural SB^{R} wurde als Aluminiumoxid das Handelsprodukt Pural NF^{R} (ebenfalls ein Böhmit) der Firma Condea-Chemie eingesetzt.
10 kg des analog Beispiel 1 hergestellten Trockengutes wurden als Ausgangsmaterial eingesetzt. Das Material wurde wieder zunächst 4 Stunden lang bei 600 °C vorgetrocknet, und dann 5 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maximum des Porendurchmessers:

85 nm (850 Å). Die Durchmesser der Poren verteilen sich auf einen Bereich zwischen 8 und 140 nm (80 und 1400 Å).
Relative Abriebzahl: 0,44
Spezifische Oberfläche: 46 m²/g,
Porenvolumen: 0,39 ml/g.
Mittlerer Porendurchmesser: 33,9 nm (339 Å).

### Beispiel 4:

Herstellung eines monomodalen Trägers mit einem Maximum des Porendurchmessers bei 100 nm (1000 Å).
10 kg des in Beispiel 3 hergestellten Ausgangsmaterials wurden zunächst 4 Stunden lang bei 600 °C vorgetrocknet und dann 6 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maximum des Porendurchmessers:

100 nm (1000 Å). Der Durchmesser der Poren verteilt sich auf einen Bereich zwischen 10 und 180 nm (100 und 1800 Å).
Relative Abriebzahl: 0,69
Spezifische Oberfläche: 33 m²/g,
Porenvolumen: 0,42 ml/g.
Mittlerer Porendurchmesser: 50,9 nm (509 Å).

### Beispiel 5:

Herstellung eines bimodalen Trägers mit Maxima des Porendurchmessers bei 11,5 und 140 nm (115 und 1400 Å).
Zunächst wurde analog Beispiel 1 Ausgangsmaterial hergestellt. Anstelle des Aluminiumoxids PURAL SB^{R} wurde CATAPAL B^{R} der Firma Vista Chemical Company verwendet.
10 kg des analog Beispiel 1 hergestellten Trockengutes als Ausgangsmaterial wurden zunächst 4 Stunden lang bei 600 °C vorgetrocknet und dann 5 Stunden lang bei 1050 °C kalziniert.

### Ausbeute:

8,5 kg kugelförmiges Aluminiumoxid. Es bestand aus den Modifikationen "theta" und "kappa", die Modifikation "alpha" war nur in Spuren nachweisbar.

### Maxima der Porendurchmesser:

15 nm und 140 nm (150 Å und 1400 Å). Die Durchmesser der Poren verteilen sich auf einen Bereich zwischen 8 und 400 nm (80 und 4000 Å).
Relative Abriebzahl: 0,50
Spezifische Oberfläche: 41 m²/g, Porenvolumen: 0,46 ml/g.
Mittlerer Porendurchmesser: 44,9 nm (449 Å).

### Beispiel 6: (Vergleichsbeispiel)

10 kg des gemäß Beispiel 1 hergestellten Ausgangsmaterials wurden zunächst 4 Stunden lang bei 600 °C vorgetrocknet und dann 2 Stunden lang bei 900 °C kalziniert.

### Ausbeute:

8,5 kg kugelförmiges Aluminiumoxid. Es bestand aus den Modifikationen "delta" und "kappa", die Modifikation "gamma" war in geringen Anteilen nachweisbar.
Maximum des Porendurchmessers: 22 nm (220 Å)
Relative Abriebzahl: 1,03

### Beispiel 7: (Vergleichsbeispiel)

10 kg des in Beispiel 1 hergestellten Ausgangsmaterials wurden zunächst 4 Stunden lang bei 600 °C vorgetrocknet und dann 4 Stunden lang bei 1100 °C kalziniert.

### Ausbeute:

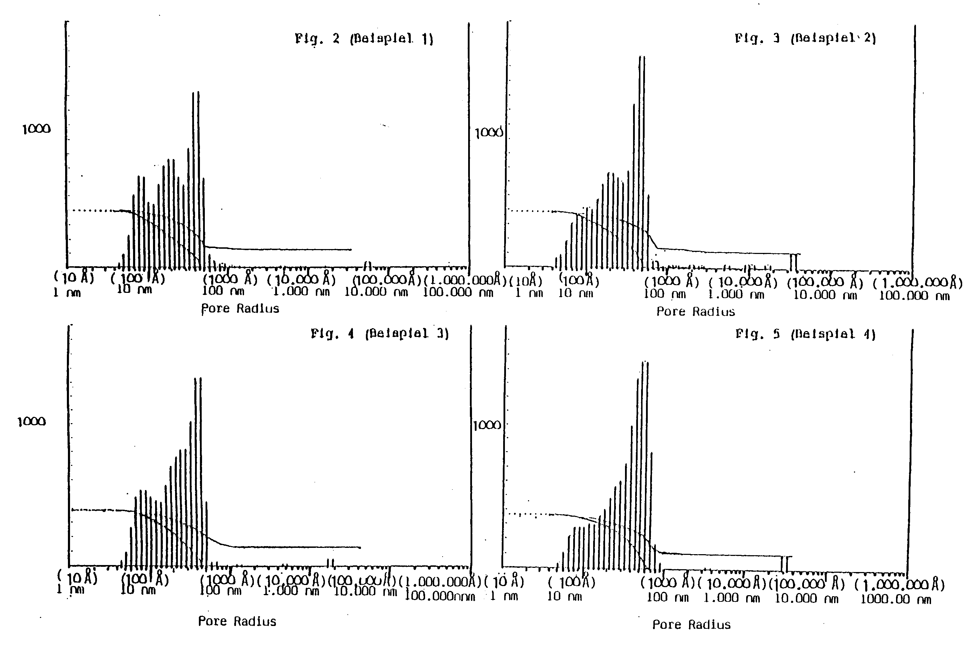

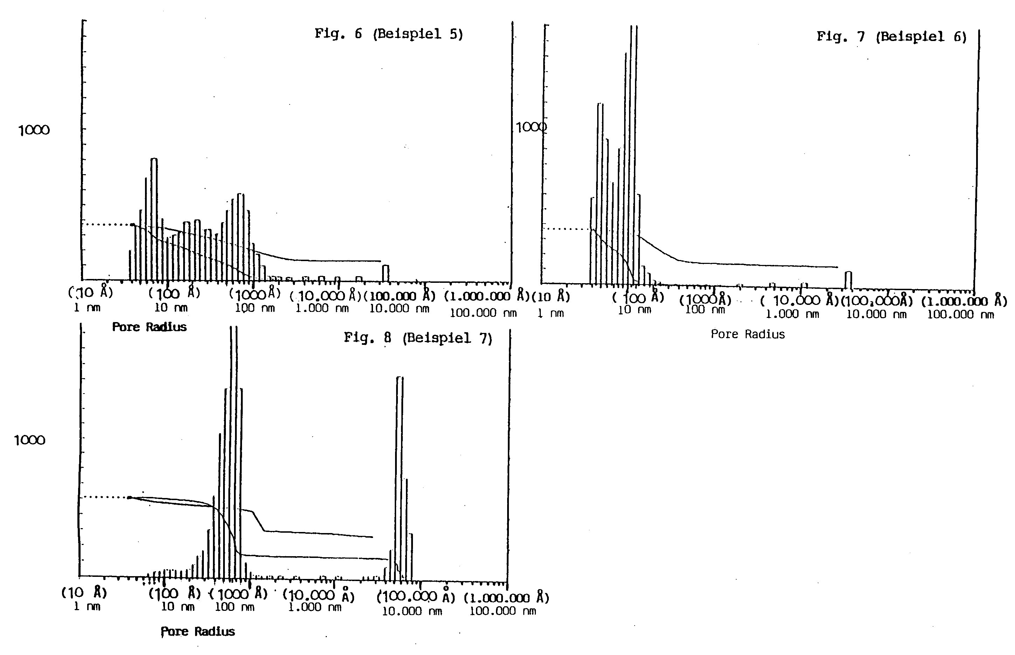

8,5 kg kugelförmiges Aluminiumoxid. Es bestand aus der Modifikation "alpha", die Modifikationen "theta" und "kappa" waren in geringen Anteilen nachweisbar.
Maxima der Porendurchmesser: 126 nm und 11.000 nm (1260 Å und 110000 Å).
Relative Abriebzahl: 1,9
Die Figuren 2 bis 8 geben die Verteilung der Porendurchmesser der Träger der Beispiele 1 bis 7 wieder.
Aus den Beispielen 1 bis 7 läßt sich entnehmen, daß die relative Abriebzahl als Maß für die Abriebfestigkeit dann befriedigende Werte aufweist (d.h. unterhalb 0,7 liegt), wenn man beim Kalzinieren darauf achtet, daß die "delta"-Modifikation nicht und die "alpha"-Modifikation allenfalls in unerwünschten, geringfügigen Anteilen im Träger entsteht.

### Beispiele 8 bis 15: Herstellung von Trägerkatalysatoren

### Beispiel 8:

Herstellung eines Pd und Cu enthaltenden Trägerkatalysators mit Maximum des Porendurchmessers bei 85 nm (850 Angström).
Verwendet wurde das gemäß Beispiel 1 hergestellte Trägermaterial. Es wurde eine als besonders günstig ermittelte Fraktion mit einem Korngrößenbereich von 400 bis 680 Mikrometer, die einen Ober- bzw. Unterkornanteil von jeweils kleiner 3 % aufwies, verwendet. Die Korngrößenverteilung innerhalb des Bereichs von 400 bis 680 Mikrometer folgte der Normalverteilung.
Die Herstellung der Katalysatoren erfolgte durch Aufbringen der katalytisch aktiven Metallverbindungen auf das Trägermaterial, wobei nach einer der nachfolgenden Methoden gearbeitet wurde.
a) In 219 ml einer wäßrigen Tetraammoniumpalladium(II)-Hydroxid-Lösung mit einem Palladiumgehalt von 2,74 g/l, d.h. einem Gesamtgehalt von 0,6 g Palladium, wurden in einem 250 ml-Rundkolben 30 g des gemäß Beispiel 1 hergestellten Trägermaterials der obenangegebenen Fraktion eingebracht. Die Lösung wurde über einen Zeitraum von 2 Stunden bei 60 °C und 30 mbar bis zur Trockne eingeengt, der erhaltene imprägnierte Träger bei 110 °C 1 Stunde lang getrocknet und der getrocknete Träger noch 0,5 Stunden bei 550 °C kalziniert.
   Unter analogen Bedingungen erfolgte die Aufbringung von Kupfer. Zur Herstellung der Kupfersalzlösung wurden 0,47 g Kupfer(II)acetat-Monohydrat (entsprechend 0,15 g Kupfer) in 100 ml vollentsalztem Wasser gelöst. Der imprägnierte Träger wurde dann 2 Stunden lang bei 110 °C getrocknet. Zur Reduktion der Metalle wurde der imprägnierte und getrocknete Träger 8 Stunden bei 350 °C in einem von außen beheizten Quarzrohr einer Wasserstoffatmosphäre ausgesetzt.
   Der fertige Katalysator besaß laut Analyse einen Palladiumgehalt von 2,0 ± 0,05 Gew.-% und einen Kupfergehalt von 0,5 ± 0,02 Gew.-%. Die relative Abriebzahl entsprach der Abriebzahl des Trägermaterials.
b) In eine Lösung von 1,68 g Palladiumdichlorid, das entspricht 1,0 g Palladium, in 11,75 ml 1-molarer Salzsäure und 22,7 ml Aceton wurden in einem 250 ml-Rundkolben 50,42 g des gemäß Beispiel 1 hergestellten Trägermaterials der obenangegebenen Fraktion eingebracht. Die Lösung wurde 30 Minuten lang, angeschlossen an einen Rotationsverdampfer, gerührt. Die Lösungsmittel wurden über einen Zeitraum von 60 Minuten bei 60 °C und 50 mbar abgedampft. Der mit Palladium imprägnierte Träger wurde dann 1 Stunde lang bei 150 °C getrocknet und 0,5 Stunden bei 550 °C kalziniert. Zur Aufbringung des Kupfers wurde der mit Palladium imprägnierte Träger in eine Lösung von 0,79 g Kupfer(II)acetat-Monohydrat, das entspricht 0,25 g Kupfer, in 30 ml Wasser gegeben und wie vorstehend beschrieben im Rotationsverdampfer behandelt. Der mit Palladium und Kupfer imprägnierte Träger wurde dann 1 Stunde lang bei 100 °C getrocknet und schließlich, wie unter a) beschrieben, reduziert.

Die Analyse entsprach den nach der Methode a) erhaltenen Werten.

### Beispiel 9:

Herstellung eines nur Palladium enthaltenden Trägerkatalysators mit einem Maximum des Porendurchmessers bei 85 nm (850 Angström).
In Analogie zu Beispiel 8 wurde der gemäß Beispiel 1 erhaltene Träger mit Palladium imprägniert. Der mit Palladium imprägnierte Träger wurde 1 Stunde lang bei 110 °C getrocknet, bei 550 °C kalziniert und mit Wasserstoff reduziert.
Der fertige Katalysator besaß einen Palladiumgehalt von 2,0 ± 0,05 Gew.-%. Relative Abriebzahl, verteilung des Porendurchmessers, spezifische Oberfläche, Porenvolumen und mittlerer Porendurchmesser entsprachen den Werten des Trägermaterials.

### Beispiel 10:

Herstellung eines Palladium und Kupfer enthaltenden Trägerkatalysators mit einem Maximum des Porendurchmessers bei 95 nm (950 Å).
Beispiel 8 wurde analog wiederholt. Diesmal wurde jedoch das in Beispiel 2 hergestellte Trägermaterial verwendet. Der erhaltene Trägerkatalysator wies einen Palladiumgehalt von 2,0 ± 0,05 Gew.-% Palladium und 0,5 ± 0,02 Gew.-% Kupfer auf. Abriebzahl, Verteilung des Porendurchmessers, spezifische Oberfläche, Porenvolumen und mittlerer Porendurchmesser entsprachen den Werten des Trägermaterials.

### Beispiel 11:

Herstellung eines Palladium und Kupfer enthaltenden Trägerkatalysators mit einem Maximum des Porendurchmessers bei 85 nm (850 Å).
Beispiel 8 wurde analog nachgearbeitet. Diesmal wurde jedoch das in Beispiel 3 erhaltene Trägermaterial eingesetzt. Der Palladiumgehalt betrug 2,0 ± 0,05 Gew.-% Palladium, der Kupfergehalt 0,5 ± 0,02 Gew.-%, Abriebzahl, Verteilung der Porendurchmesser, spezifische Oberfläche, Porenvolumen und mittlerer Porendurchmesser entsprachen den Werten des verwendeten Trägermaterials.

### Beispiel 12:

Herstellung eines Palladium und Kupfer enthaltenden Trägerkatalysators mit einem Maximum des Porendurchmessers bei 100 um (1000 Å).
Beispiel 8 wurde analog nachgearbeitet, diesmal wurde jedoch das in Beispiel 4 hergestellte Trägermaterial verwendet. Der erhaltene Trägerkatalysator wies einen Palladiumgehalt von 2,0 ± 0,05 Gew.-% und einen Kupfergehalt von 0,5 ± 0,02 Gew.-% auf. Abriebzahl, Verteilung der Porendurchmesser, spezifische Oberfläche, Porenvolumen und mittlerer Porendurchmesser entsprachen den Werten des verwendeten Trägermaterials.

### Beispiel 13:

Herstellung eines Palladium und Kupfer enthaltenden bimodalen Trägerkatalysators mit Maxima der Porendurchmesser bei 11,5 und 140 nm (115 und 1400 Å).
Beispiel 8 wurde analog nachgearbeitet, diesmal wurde jedoch das in Beispiel 5 erhaltene Trägermaterial verwendet. Der erhaltene Trägerkatalysator wies einen Palladiumgehalt von 2,0 ± 0,05 Gew.-% und einen Kupfergehalt von 0,5 ± 0,02 Gew.-% auf. Abriebzahl, Verteilung der Porendurchmesser, spezifische Oberfläche, Porenvolumen und mittlerer Porendurchmesser entsprachen den Werten des Trägermaterials.

### Beispiel 14: (Vergleichsbeispiel)

Herstellung eines Trägerkatalysators mit einem Maximum des Porendurchmessers bei 22 nm (220 Å).
Beispiel 8 wurde analog nachgearbeitet. Diesmal wurde das gemäß Beispiel 6 hergestellte Trägermaterial verwendet. Der fertige Katalysator enthielt 2,0 ± 0,05 Gew.-% Palladium und 0,5 ± 0,02 Gew.-% Kupfer. Abriebzahl, Verteilung des Porendurchmessers, spezifische Oberfläche, Porenvolumen und mittlerer Porendurchmesser entsprachen den Werten des verwendeten Trägermaterials.

### Beispiel 15: (Vergleichsbeispiel)

Beispiel 8 wurde analog nachgearbeitet. Diesmal wurde das gemäß Beispiel 7 hergestellte Trägermaterial verwendet. Der fertige Katalysator enthielt 2,0 ± 0,05 Gew.-% Palladium und 0,5 ± 0,02 Gew.-% Kupfer. Abriebzahl, Verteilung der Porendurchmesser, spezifische Oberfläche, Porenvolumen und mittlerer Porendurchmesser entsprachen den Werten des verwendeten Trägermaterials.

### Beispiel 16:

Anwendung des gemäß Beispiel 8 hergestellten Palladium und Kupfer enthaltenden Trägerkatalysators zur Entfernung von Sauerstoff und Nitrat aus Wasser in der Wirbelschicht.

### Verwendete Apparatur:

Eine Rohwasserleitung führte zunächst in einen Schwebstofffilter und dann in eine Druckerhöhungsvorrichtung. Aus der Druckerhöhungsvorrichtung führte eine Leitung in einen Begasungsreaktor. In diesem Begasungsreaktor konnte über Silikonmembranen Wasserstoff in das Wasser eingetragen werden. Der Begasungsreaktor war mit einem Reaktor verbunden, welche der katalytische Sauerstoff und Nitratabbau durchgeführt wurde. In diesem Reaktor waren 22 kg des gemäß Beispiel 8 unter Verwendung von Trägermaterial des Beispiels 1 hergestellten, Palladium und Kupfer enthaltenden Trägerkatalysators enthalten waren. Eine aus dem Reaktor führende Auslaßleitung für das behandelte Wasser führte in einen Schwebstoffilter. Das den Schwebstoffilter verlassende Wasser konnte dann als Reinwasser dem jeweiligen Anwendungszweck zugeführt werden.

### Versuchsdurchführung:

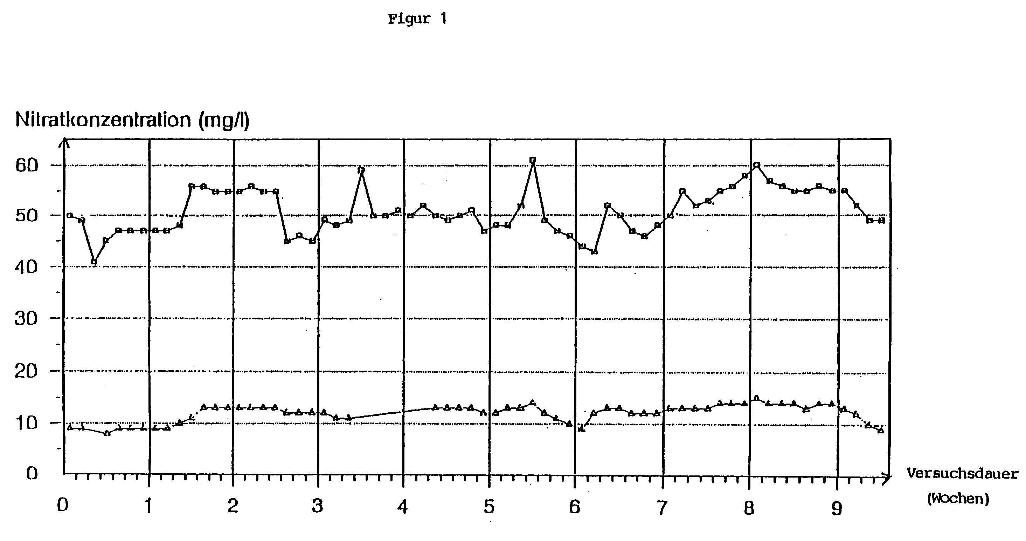

Der Versuch wurde während einer Zeitdauer von über 9 Wochen in einem niedersächsischen Wasserwerk durchgeführt. Der Nitratgehalt des Rohwassers (Grundwasser) schwankte zwischen 40 mg und 60 mg pro Liter. Der Sauerstoffgehalt betrug 4,2 mg/l. Die Temperatur des Rohwassers betrug 11 °C.
Das Rohwasser wurde zunächst durch den Schwebstoffilter geführt und dann in der Druckerhöhungsvorrichtung auf einen Wasserdruck von 5·10⁵Pa (5 bar) gebracht. Im Begasungsreaktor wurde das Wasser mit Wasserstoff begast. Das mit Wasserstoff beladene Wasser wurde mit einer Durchflußmenge von 2000 Liter pro Stunde durch den Reaktor geleitet, in welchem das Trägerkatalysatormaterial in der Wirbelschicht gehalten wurde. Sowohl der Nitratgehalt des zu behandelnden nitratbelasteten Grundwassers als auch der Nitrat-Gehalt des behandelten Grundwassers wurden über den Zeitraum von mehr als 9 Wochen aufgezeichnet. Der Figur 1 können die Nitrat-Konzentrationen des unbehandelten bzw. des behandelten Grundwassers, die über eine Vielzahl von Messungen ermittelt wurden, entnommen werden. Die Nitrat-Abbauleistung konnte zu 3,5 g Nitrat pro Kilogramm Katalysator und Stunde ermittelt werden. Wie die Figur 1 beweist, ist der Katalysator über Monate hinweg standfest und liefert auch bei schwankenden Nitrat-Mengen konstant gute Ergebnisse.
Einige Analysendaten des unbehandelten und behandelten Grundwassers sind in der folgenden Tabelle zusammengestellt.

**Tabelle 1**

| Analysendaten des unbehandelten bzw. behandelten Grundwassers | | |
|---|---|---|
| Parameter | unbehandeltes Grundwasser | behandeltes Grundwasser |
| pH-Wert | 7,10 | 7,65 |
| O₂-Gehalt | 4,2 mg/l | < 20 Mikrogramm |
| Nitrat | 59 mg/l | 11 mg/l |
| Nitrit | < 0,1 mg/l | < 0,1 mg/l |
| Chlorid | 102 mg/l | 101 mg/l |
| Sulfat | 149 mg/l | 152 mg/l |
| Ammonium | < 0,05 mg/l | < 0,05 mg/l |
| Calcium | 172 mg/l | 175 mg/l |
| Eisen | < 0,05 mg/l | < 0,05 mg/l |
| Mangan | < 0,05 mg/l | < 0,05 mg/l |

Die gemäß den Beispielen 9 bis 13 hergestellten Trägerkatalysatoren erwiesen sich als ebenfalls langzeitstabil. Ihre Selektivität beim Nitrat-Abbau war sehr gut.
Die gemäß den Vergleichsbeispielen 14 und 15 hergestellten Trägerkatalysatoren wiesen hingegen weder im Hinblick auf die Abriebfestigkeit noch im Hinblick auf die Selektivität beim Nitratabbau befriedigende Eigenschaften auf.

### Beispiel 17:

Durchführung des erfindungsgemäßen Verfahrens zur Entfernung von Sauerstoff und Nitrat aus Wasser in einem diskontinuierlichen Rührreaktor.
Die Umsetzung wurde in einem diskontinuierlich betriebenen Rührreaktor durchgeführt, welcher einen temperierbaren, 250 ml fassenden Reaktor mit einem Magnetrührer enthielt, in welchen Wasserstoff am Boden über einen porösen Kunststoffschlauch mit Nadelventil zur Einstellung des Wasserstoff-Volumenstroms eingeleitet werden konnte. Die Apparatur war ferner mit einer pH-Meß- und Regeleinheit versehen, deren in dem Reaktor befindliche pH-Meßelektrode die während der Reaktion stattfindende Abweichung des pH-Wertes vom pH-Anfangswert messen und über eine Dosiervorrichtung die Änderung des pH-Wertes durch Zugabe von wäßriger verdünnter Salzsäurelösung ausgleichen kann. Das zur Konstanthaltung des pH-Wertes zudosierte Säurevolumen, welches der umgesetzten Nitratmenge proportional ist, wurde auf einem Meßschreiber aufgezeichnet.
In den Reaktor wurden 240 ml Wasser mit einem Nitratgehalt von 50 mg/l und einem pH-Wert von 6,0 sowie 2,0 g des gemäß Beispiel 8 hergestellten Trägerkatalysators gegeben. Die Temperatur im Reaktor wurde auf 10 °C eingestellt, und es wurde mit Wasserstoff mit einer Begasungsrate von 30 l/h begast. Nach 68 Minuten war das Nitrat vollständig abgebaut. Die spezifische Nitratabbauleistung des Katalysators bis zum vollständigen Umsatz von 50 mg Nitrat in 240 ml Wasser wurde auf 1 Stunde und 1 g Katalysator berechnet.
- Spezifische Nitratabbauleistung:: 5,5 mg Nitrat/h x g Katalysator

### Erläuterungen zu den Figuren:

- Fig. 1:: Ordinate: Nitratkonzentration in (mg/l)
Abszisse: Versuchsdauer (Wochen)
Rohwasser: □
Ablaufwasser: △
- Fig. 2 bis 5:: Ordinate: relative Häufigkeit eines Porendurchmessers
Abszisse: mittlerer Porenradius (nm) in logarithmischer Teilung (Abstände zwischen 1 und 10 nm, 10 und 100 nm, 100 und 1.000 nm, 1.000 und 10.000 nm jeweils äquidistant)
[mittlerer Porenradius (Å) in logarithmischer Teilung (Abstände zwischen 10 und 100 Å, 100 und 1.000 Å, 1.000 und 10.000 Å, 10.000 und 100.000 Å jeweils äquidistant]

## Patentansprüche

1. Trägerkatalysator, verwendbar zur Entfernung oder Verminderung des Sauerstoff-, Nitrit-und/oder Nitratgehaltes von nitrit- und/oder nitratbelastetem Wasser unter selektiver Stickstoffbildung, bestehend aus einem mit einer Metallkomponente imprägnierten porösen anorganischen Trägermaterial, wobei die Metallkomponente aus Palladium und/oder Rhodium besteht oder aus Palladium und einem Metall der Kupfergruppe, dadurch gekennzeichnet, daß der Träger aus Aluminiumoxid der Modifikationen "theta" und "kappa" besteht, wobei die Modifikation "alpha" in einem Anteil von weniger als 10 Gew.-%, bezogen auf das Trägergewicht, vorliegt und der Träger frei ist von Aluminiumoxid der Modifikationen "gamma" und "delta" und entweder ein Maximum, d. h. eine monomodale Porenverteilung, des Porendurchmessers im Bereich von 70 bis 150 nm (700 bis 1500 Å) aufweist oder zwei Maxima, d. h. eine bimodale Porenverteilung, des Porendurchmessers im Bereich von 10 bis 150 nm (100 bis 1500 Å) aufweist, wobei der mittlere Porendurchmesser zwischen 30 und 50 nm (300 und 500 Å) beträgt.

2. Trägerkatalysator nach Anspruch 1, dadurch gekennzeichnet, daß die spezifische Oberfläche, berechnet nach der Quecksilber-Porosimetrie-Methode, zwischen 41 und 50 m²/g beträgt.

3. Trägerkatalysator nach Anspruch 1 oder 2, dadurch gekennzeichnet, daß er kugelförmig ausgebildet ist und einen Durchmesser zwischen 0,1 und 1 mm aufweist.

4. Trägerkatalysator nach einem der vorhergehenden Ansprüche, dadurch gekennzeichnet, daß das Metall der Kupfergruppe Kupfer ist.

5. Trägerkatalysator nach einem der vorhergehenden Ansprüche, dadurch gekennzeichnet, daß die Metallkomponente 0,1 bis 10 Gew.-% des Gesamtgewichts des Trägerkatalysators beträgt.

6. Trägerkatalysator nach einem der vorhergehenden Ansprüche, dadurch gekennzeichnet, daß der Katalysator einen Palladiumgehalt von 0,1 bis 5 Gew.-%, bezogen auf das Gesamtgewicht des Trägerkatalysators, aufweist.

7. Trägerkatalysator nach einem der vorhergehenden Ansprüche, dadurch gekennzeichnet, daß die Metallkomponente aus Palladium und Kupfer besteht.

8. Trägerkatalysator nach Anspruch 7, dadurch gekennzeichnet, daß das Gewichtsverhältnis von Palladium zu Kupfer zwischen 2:1 und 8:1, vorzugsweise 3:1 und 5:1, beträgt.

9. Trägerkatalysator nach einem der vorhergehenden Ansprüche, dadurch gekennzeichnet, daß das Gewichtsverhältnis der Modifikationen "theta" und "kappa" zwischen 30:70 und 10:90 liegt.

10. Trägerkatalysator nach einem der vorhergehenden Ansprüche, dadurch gekennzeichnet, daß im Falle einer monomodalen Porenverteilung das Maximum des Porendurchmessers im Bereich von 85 bis 105 nm (850 bis 1050 Å) vorliegt.

11. Verfahren zur Herstellung eines Trägerkatalysators der Ansprüche 1 bis 10, dadurch gekennzeichnet, daß man amorphes Aluminiumoxid, d. h. Aluminiumoxid der Modifikation "chi", mit Aluminiumoxid-Hydrat mit Ausnahme von beta-Monohydrat im Gewichtsverhältnis 33,69:20,50 bis 44,21:7,17 unter Wasserzusatz, miteinander vermischt, in die gewünschte Form bringt und 4,5 bis 6,5 Stunden lang bei einer Temperatur von 1045 bis 1055 °C kalziniert, mit der Metallkomponente imprägniert und erneut kalziniert.

12. Verfahren nach Anspruch 11, dadurch gekennzeichnet, daß man das Gemisch aus amorphen Aluminiumoxid und Aluminiumoxid-Hydrat nach der Methode der Aufbau-Granulation zu kugelförmigen Partikeln formt.

13. Verfahren nach Anspruch 12, dadurch gekennzeichnet, daß man Unterkorn oder zerkleinertes Überkorn aus einer vorhergehenden Träger-Katalysator-Herstellung zusetzt als Granulationskeime.

14. Verfahren nach Anspruch 12 oder 13, dadurch gekennzeichnet, daß man das Aluminiumoxid zu kugelförmigen Partikeln eines Durchmessers von 0,1 bis 1,0 mm formt.

15. Kontinuierliches durchführbares Verfahren zur Entfernung oder Verminderung des Sauerstoffgehaltes, des Nitrit- und/oder Nitrat-Gehaltes von sauerstoffhaltigem und/oder nitrit- und/oder nitratbelastetem Wasser unter selektiver Stickstoff-Bildung, wobei man in das sauerstoffhaltige, nitrit- und/oder nitratbelastete Wasser Wasserstoffgas einführt und das mit Wasserstoff beladene Wasser mit einem Katalysator nach einem der Ansprüche 1 bis 10 kontaktiert, und man zur Behandlung von nur nitritbelastetem Wasser einen Katalysator, dessen Metallkomponente aus Palladium und/oder Rhodium besteht und, sofern das zu behandelnde Wasser auch Nitrat enthält, einen Katalysator, dessen Metallkomponente aus Palladium und einem Metall der Kupfergruppe oder aus Rhodium und gegebenenfalls Palladium besteht, oder einem Gemisch aus einem Katalysator, dessen Metallkomponente aus Palladium und einem Metall der Kupfergruppe besteht, und einem Katalysator, dessen Metallkomponente nur aus Palladium besteht, einsetzt, und dabei den pH-Wert des Wassers nicht über pH 8 ansteigen läßt und das Verfahren gegebenenfalls so oft hintereinander durchführt, bis der Sauerstoffgehalt, der Nitritgehalt und/oder der Nitratgehalt des Wassers entfernt oder auf einen tolerierbaren Wert vermindert ist.

16. Verfahren nach Anspruch 15, dadurch gekennzeichnet, daß man ein Katalysatorsystem verwendet, welches aus Katalysatorteilchen gebildet wird, von denen ein Teil mit Palladium und einem Metall der Kupfergruppe, insbesondere Kupfer und ein anderer Teil nur mit Palladium imprägniert ist.

17. Verfahren nach Anspruch 15 oder 16, dadurch gekennzeichnet, daß in das Wasser eine solche Menge Wasserstoff eingeführt wird, welche mindestens der zur Reduktion des vorbestimmten Gehaltes an Sauerstoff und Nitrit und/oder Nitrat stöchiometrisch notwendigen Wasserstoffmenge und höchstens einem 20 gew.-%igen Überschuß dieser Menge entspricht.

18. Verfahren nach Anspruch 15 bis 17, dadurch gekennzeichnet, daß man Wasser einsetzt, welches mit 0,1 bis 20 mg/l Nitrit und/oder 5 bis 600 mg/l Nitrat belastet ist.

19. Verfahren nach einem der Ansprüche 15 bis 18, dadurch gekennzeichnet, daß man es in der Wirbelschicht durchführt.

## Claims

1. A supported catalyst, usable for removing or reducing the oxygen, nitrite and/or nitrate content of nitrite-and/or nitrate-polluted water with the selective formation of nitrogen, consisting of an inorganic porous carrier material impregnated with a metal component, the metal component consisting of palladium and/or rhodium or of palladium and a metal of the copper group, characterised in that the support consists of aluminium oxide of the modifications "theta" and "kappa", the modification "alpha" being present in a proportion of less than 10% by weight, relative to the weight of the support, and the support being free of aluminium oxide of the modifications "gamma" and "delta" and either has a maximum, i.e. a monomodal pore distribution, of the pore diameter in the range of 70 to 150 nm (700 to 1500 Å) or has two maxima, i.e. a bimodal pore distribution, of the pore diameter in the range of 10 to 150 nm (100 to 1500 Å), the mean pore diameter being between 30 and 50 nm (300 and 500 Å).

2. A supported catalyst according to Claim 1, characterised in that the specific surface area, calculated according to the mercury porosimetry method, is between 41 and 50 m²/g.

3. A supported catalyst according to Claim 1 or 2, characterised in that it is spherical in shape and has a diameter of between 0.1 and 1 mm.

4. A supported catalyst according to one of the preceding claims, characterised in that the metal of the copper group is copper.

5. A supported catalyst according to one of the preceding claims, characterised in that the metal component is 0.1 to 10% by weight of the total weight of the supported catalyst.

6. A supported catalyst according to one of the preceding claims, characterised in that the catalyst has a palladium content of 0.1 to 5% by weight, relative to the total weight of the supported catalyst.

7. A supported catalyst according to one of the preceding claims, characterised in that the metal component consists of palladium and copper.

8. A supported catalyst according to Claim 7, characterised in that the weight ratio of palladium to copper is between 2:1 and 8:1, preferably 3:1 and 5:1.

9. A supported catalyst according to one of the preceding claims, characterised in that the weight ratio of the modifications "theta" and "kappa" is between 30:70 and 10:90.

10. A supported catalyst according to one of the preceding claims, characterised in that in the case of a monomodal pore distribution the maximum of the pore diameter is in the range of 85 to 105 nm (850 to 1050 Å).

11. A method for preparing a supported catalyst of Claims 1 to 10, characterised in that amorphous aluminium oxide, i.e. aluminium oxide of the modification "chi", is mixed with aluminium oxide-hydrate with the exception of beta-monohydrate in a weight ratio of 33.69:20.50 to 44.21:7.17 with the addition of water, is brought into the desired form and is calcined for 4.5 to 6.5 hours at a temperature of 1045°C to 1055°C, is impregnated with the metal component and is calcined again.

12. A method according to Claim 11, characterised in that the mixture of amorphous aluminium oxide and aluminium oxide-hydrate is formed into spherical particles in accordance with the pelletising method.

13. A method according to Claim 12, characterised in that undersize or crushed oversize from a preceding supported catalyst production process is added as granulation nuclei.

14. A method according to Claim 12 or 13, characterised in that the aluminium oxide is shaped into spherical particles of a diameter of 0.1 to 1.0 mm.

15. A continuously performable process for removing or reducing the oxygen content, the nitrite and/or nitrate content of oxygen-containing and/or nitrite- and/or nitrate-polluted water with selective formation of nitrogen, wherein hydrogen gas is introduced into the oxygen-containing, nitrite- and/or nitrate-polluted water and the water loaded with hydrogen is contacted with a catalyst according to one of Claims 1 to 10, and for the treatment of water which is polluted only with nitrite, a catalyst is used the metal component of which consists of palladium and/or rhodium and, if the water to be treated also contains nitrate, a catalyst is used, the metal component of which consists of palladium and a metal of the copper group, or of rhodium and optionally palladium, or a mixture is used consisting of a catalyst, the metal component of which consists of palladium and a metal of the copper group, and of a catalyst, the metal component of which consists solely of palladium, and the pH value of the water is not permitted to rise above pH 8 and the process is optionally performed consecutively as often as necessary until the oxygen content, the nitrite content and/or the nitrate content of the water has been removed or reduced to a tolerable value.

16. A method according to Claim 15, characterised in that a catalyst system is used which is formed from catalyst particles, part of which are impregnated with palladium and a metal of the copper group, in particular copper, and another part of which is impregnated solely with palladium.

17. A method according to Claim 15 or 16, characterised in that a quantity of hydrogen is introduced into the water which corresponds at least to the quantity of hydrogen which is stoichiometrically required for reduction of the predetermined content of oxygen and nitrite and/or nitrate and at most to a 20% excess of this quantity.

18. A process according to Claims 15 to 17, characterised in that water is used which is polluted with 0.1 to 20 mg/l nitrite and/or 5 to 600 mg/l nitrate.

19. A method according to one of Claims 15 to 18, characterised in that it is performed in a fluidised bed.

## Revendications

1. Catalyseur supporté applicable pour éliminer ou réduire le taux d'oxygène, de nitrite et/ou de nitrate contenu dans de l'eau chargée de nitrite et/ou de nitrate avec formation sélective d'azote, se composant d'un matériau de support anorganique poreux imprégné d'une composante métallique, la composante métallique étant en palladium et/ou rhodium ou bien en palladium et un métal du groupe du cuivre caractérisé en ce que le support est constitué par de l'oxyde d'aluminium des formes "theta" et "kappa", la forme "alpha" se trouvant dans un rapport de poids de moins de 10% par rapport au poids du support et le support ne contenant pas d'oxyde d'aluminium des formes "gamma" et "delta" et dont la répartition des diamètres des pores présente soit un maximum - répartition monomodale des pores - dans la plage de 70 à 150 nm (700 à 1500 Å) ou 2 maxima - répartition bimodale des pores - le diamètre des pores étant de 10 à 150 nm (100 à 1500 Å), le diamètre moyen des pores se situant entre 30 et 50 nm (300 et 500 Å).

2. Catalyseur supporté selon la revendication 1, caractérisé par la surface spécifique calculée selon la méthode de la porosimétrie au mercure, comprise entre 41 et 50 m²/g.

3. Catalyseur supporté selon les revendications 1 ou 2 caractérisé par sa forme sphérique et un diamètre entre 0,1 et 1 mm.

4. Catalyseur supporté selon l'une des revendications précédentes caractérisé en ce que le métal du groupe du cuivre est du cuivre.

5. Catalyseur supporté selon l'une des revendications précédentes caractérisé en ce que la composante métallique comporte 0,1 à 10% en poids du poids total du catalyseur supporté.

6. Catalyseur supporté selon l'une des revendications précédentes caractérisé en ce que le catalyseur comporte une teneur de palladium de 0,1 à 5% en poids du poids total du catalyseur supporté.

7. Catalyseur supporté selon l'une des revendications précédentes caractérisé en ce que la composante métallique est constituée par du palladium et du cuivre.

8. Catalyseur supporté selon la revendication 7, caractérisé par le rapport de poids entre le palladium et le cuivre entre 2:1 et 8:1; de préférence entre 3:1 et 5:1.

9. Catalyseur supporté selon l'une des revendications précédentes caractérisé en ce que les formes "theta" et "kappa" existent dans le rapport de poids 30:70 et 10:90.

10. Support de catalyseur selon l'une des revendications précédentes caractérisé, dans le cas d'une répartition monomodale des pores, en ce que le diamètre maximum des pores se situe dans la plage entre 85 et 105 nm (850 à 1050 Å).

11. Procédé de fabrication d'un catalyseur supporté selon les revendications 1 à 10, caractérisé en ce que l'on mélange de l'oxyde d'aluminium amorphe (forme "chi") avec de l'hydrate d'oxyde d'aluminium à l'exception de β-monohydrate dans un rapport de poids 33,69:20,50 à 44,21:7,17 avec addition d'eau en lui donnant la forme souhaitée, on le laisse calciner pendant 4,5 à 6,5 heures à une température de 1045 à 1055°C, on l'imprègne avec la composante métallique et on le calcine de nouveau.

12. Procédé selon la revendication 11, caractérisé en ce que l'on forme le mélange d'oxyde d'aluminium amorphe et d'hydrate d'oxyde d'aluminium en particules sphériques selon la méthode de granulation par accumulation en particules.

13. Procédé selon la revendication 12, caractérisé en ce que l'on ajoute du grain de trop petit diamètre ou du grain de plus grand diamètre broyé, provenant d'une fabrication précédente de catalyseur supporté, comme germinateur.

14. Procédé selon les revendications 12 ou 13, caractérisé en ce que l'on forme l'oxyde d'aluminium en particules sphériques d'un diamètre de 0,1 à 1,0 mm.

15. Procédé continu pour éliminer ou diminuer le taux d'oxygène, de nitrite et/ou de nitrate contenu dans de l'eau chargée d'oxygène et/ou de nitrite et/ou de nitrate avec formation sélective d'azote en ce que l'on introduit du gaz d'hydrogène dans l'eau contenant de l'oxygène, chargée de nitrite et/ou de nitrate et que l'on contacte l'eau chargée d'hydrogène avec un catalyseur selon l'une des revendications 1 à 10 et, pour le traitement de l'eau chargée de nitrite seulement, on utilise un catalyseur dont les composantes métalliques sont en palladium et/ou rhodium et - pour autant que l'eau à traiter contienne également du nitrate - un catalyseur dont les composantes métalliques sont en palladium et dans un métal du groupe du cuivre ou bien en rhodium et le cas échéant en palladium, ou bien on utilise un mélange composé d'un catalyseur dont les composantes métalliques sont en palladium et dans un métal du groupe du cuivre et un catalyseur dont les composantes métalliques sont en palladium uniquement tout en veillant à ce que le taux de pH de l'eau ne dépasse pas pH 8 et on répète le procédé le cas échéant jusqu'à ce que le taux d'oxygène , de nitrite et/ou de nitrate de l'eau soit éliminé ou réduit à un taux tolérable.

16. Procédé selon la revendication 15, caractérisé en ce que l'on utilise un système de catalyseur constitué de particules de catalyseur dont une partie est imprégnée de palladium et d'un métal du groupe du cuivre - en particulier de cuivre - et l'autre partie est imprégnée de palladium seulement.

17. Procédé selon les revendications 15 à 16, caractérisé en ce que l'on ajoute à l'eau une quantité d'hydrogène qui corresponde au minimum à la quantité d'hydrogène nécessaire stoechiométriquement pour réduire le taux d'oxygène, de nitrite et/ou de nitrate déterminé au préalable et qui n'excède pas au maximum 20% de cette quantité stoechiométrique.

18. Procédé selon les revendications 15 à 17, caractérisé en ce que l'on utilise de l'eau chargée de 0,1 à 20 mg/l de nitrite et/ou de 5 à 600 mg/l de nitrate.

19. Procédé selon l'une des revendications 15 à 18, caractérisé par sa réalisation en couche fluidisée.
